# EUROPÄISCHE PATENTANMELDUNG

(11) **EP 1 561 379 A1**
(43) Veröffentlichungstag der Anmeldung: **10.08.2005**
(21) Anmeldenummer: 04030590.6
(22) Anmeldetag: 23.12.2004
(51) Int. Cl.: A21B 3/13

(54) **Backblech**

(30) Priorität: 04.02.2004 DE 102004005440
(71) Anmelder: Electrolux Home Products Corporation N.V., 1930 Zaventem (BE)
(72) Erfinder: Dänzer, Stefan, 91631 Wettringen (DE); Arnold, Reiner, 91610 Insingen (DE)
(74) Vertreter: Hochmuth, Jürgen

(57) **Zusammenfassung**

Die Erfindung betrifft ein Backblech (2), das an einer oder mehreren Seiten an, auf oder in Führungen und/oder Einhängeeinrichtungen eines Haushaltsgarofens aufnehmbar ist, wobei wenigstens eine Seitenwand (6, 28) des Backbleches (2) von einem Backgut aufnehmenden Boden (4) abnehmbar oder in eine Lage schwenkbar ist, die einen seitlichen Zugang zum Backgut ermöglicht.

## Beschreibung

### Backblech

Die Erfindung betrifft ein Backblech, das an einer oder mehreren Seiten an, auf oder in Führungen und/oder Einhängeeinrichtungen eines Haushaltsgarofens aufnehmbar ist.

Derartige Backbleche sind einstückig ausgebildet. Sie besitzen einen rechteckigen Boden und eine umlaufende Seitenwand, die sich mehr oder weniger vertikal über dem Boden erhebt und an zwei gegenüberliegenden Seiten nach außen weisende horizontale Abschnitte aufweist, die auf raumfesten oder teleskopartigen Führungen des Garofens aufliegen können. Während das Einbringen des Teiges bis an die Seitenwand heran keine Probleme bereitet, ist das zerstörungsfreie Entnehmen des fertig gebackenen und in der Regel leicht anhaftenden Kuchens nicht ohne weiteres möglich. Selbst wenn die Seitenwände weniger hoch oder eine Seitenwand an einer der vier Seiten weniger steil ist als an den übrigen Seiten, behindert diese Seitenwand das Herausnehmen, bei dem erfahrungsgemäß zunächst der Umfang mit einem Messer vom Blech getrennt und anschließend mit einem speziellen "Kuchenretter" versucht wird, unter den Kuchen unterzuhebeln, was müßig ist und häufig zu Deformationen des Kuchens führt.

Der Erfindung liegt die Aufgabe zugrunde, ein Backblech zum Einschieben in oder zum Auflegen auf einander gegenüberliegende Führungen eines Garofens zu schaffen, das die Entnahme des fertig gebackenen Kuchens erleichtert.

Erfindungsgemäß wird diese Aufgabe durch die Merkmale des Anspruches 1 gelöst. Vorteilhafte Ausbildungen ergeben sich aus den Unteransprüchen.

Das Backblech ist an einer oder mehreren Seiten an, auf oder in Führungen und/oder Einhängeeinrichtungen eines Haushaltsgarofens aufnehmbar, wobei wenigstens eine Seitenwand des Backbleches von einem das Backgut aufnehmenden Boden abnehmbar und/oder in eine Lage schwenkbar ist, die einen seitlichen Zugang zum Backgut ermöglicht.

Dabei ist insbesondere wenigstens eine Seitenwand mit dem Boden und/oder wenigstens einer benachbarten Seitenwand lösbar verbunden.

Vorzugsweise ist wenigstens eine Seitenwand am Boden angelenkt oder anlenkbar und um eine horizontale Schwenkachse in eine mit dem Boden fluchtende Lage oder darüber hinaus schwenkbar. Sie kann hierzu an ihrer Unterseite zurückgewölbte Laschen aufweisen, die in randnahe Schlitze des Bodens einführbar und um den Rand herum schwenkbar sind.

Wenigstens eine Seitenwand kann aber auch an einer benachbarten Seitenwand angelenkt oder anlenkbar und um eine vertikale Schwenkachse in eine mit der benachbarten Seitenwand fluchtende Lage oder darüber hinaus schwenkbar sein, wobei sie vorzugsweise an einem seitlichen Ende zurückgewölbte Laschen aufweist, die in randnahe Schlitze der benachbarten Seitenwand einführbar und um den Rand herum schwenkbar sind.

Um zwei Seitenwände in einer vorzugsweise vertikalen Lage aneinander zu halten, lässt sich wenigstens eine Seitenwand an wenigstens einem seitlichen Ende mit einem Hebel versehen, der um eine (etwa horizontale) Achse in eine Ausnehmung einer benachbarten Seitenwand schwenkbar ist.

Die Seitenwände können untereinander und/oder mit dem Boden durch Steck-, Klemm-, Schnapp- und/oder Klipseinrichtungen lösbar verbunden sein. Vorzugsweise sind alle Seitenwände untereinander und/oder mit dem Boden lösbar verbunden. Der Boden lässt sich dann beispielsweise zum Servieren verwenden.

Die Erfindung wird nachstehend anhand zweier Ausführungsbeispiele näher erläutert. In den zugehörigen Zeichnungen zeigen:
Fig. 1 einen dreidimensionalen Ausschnitt auf ein in Boden und Seitenwände zerlegbares erstes Backblech, im montierten Zustand von außen,
Fig. 2 das erste Backblech im entriegelten Zustand der Seitenwände voneinander und vom Boden,
Fig. 3 eine verriegelte Seitenwand des ersten Backbleches, von innen,
Fig. 4 die entriegelte Seitenwand,
Fig. 5 einen dreidimensionalen Ausschnitt auf ein in zwei Teile zerlegtes zweites Backblech,
Fig. 6 das zweite Backblech im montierten Zustand.

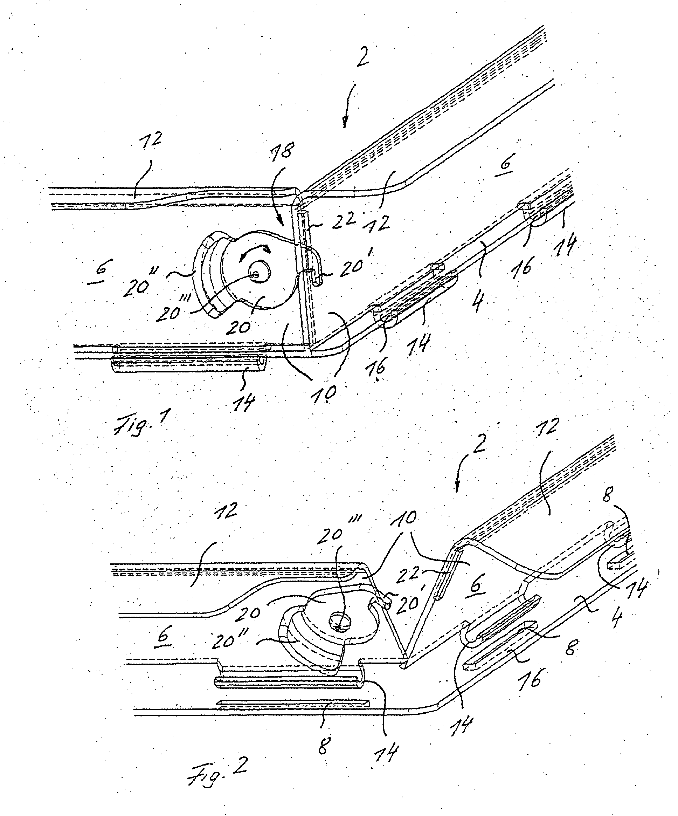

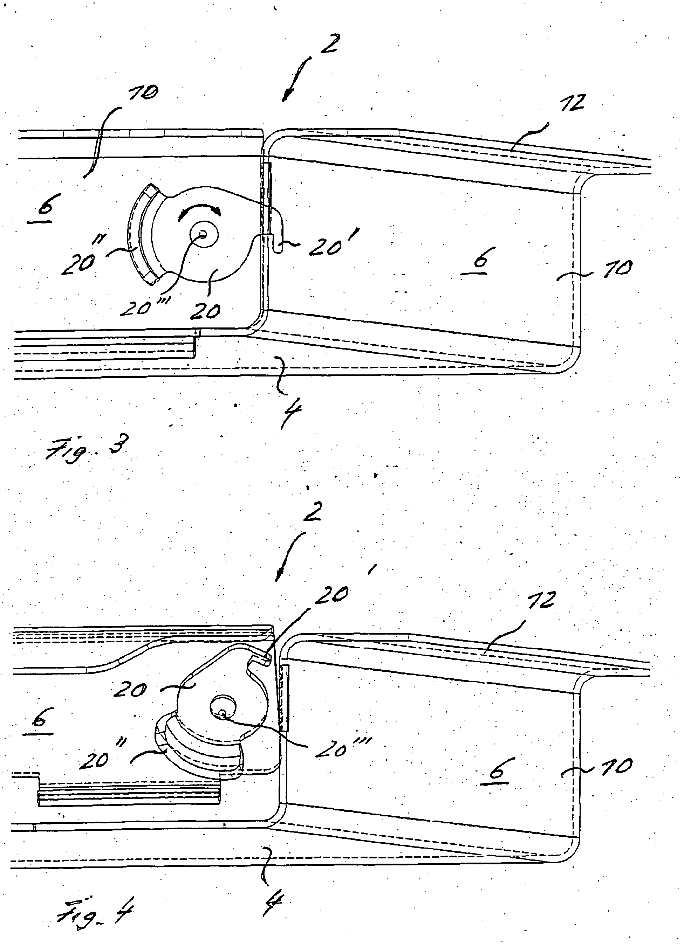

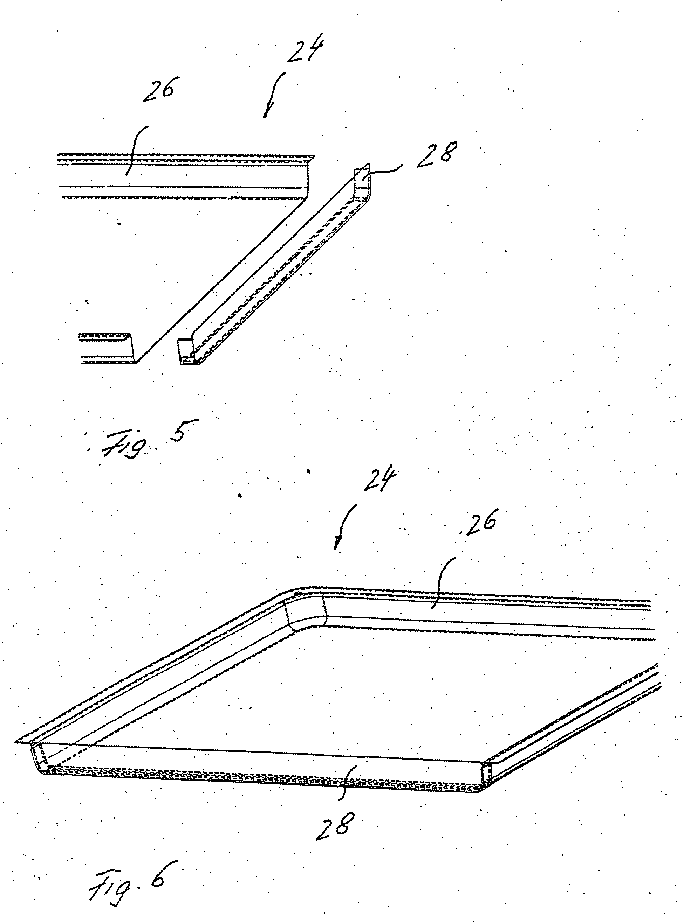

Das Backblech 2 gemäß der Figuren 1 bis 4 besteht aus einem Böden 4 und vier Seitenwänden 6, die untereinander und mit dem Boden 4 lösbar verbindbar sind.

Der ebene Boden 4 aus beispielsweise (antihaftbeschichtetem) emailliertem Blech ist rechteckig ausgebildet. In seinen Randbereichen weist er randparallele Schlitze 8 auf.

Im montierten Zustand des Backbleches 2 besitzen die im Querschnitt winklig ausgebildeten Seitenwände 6 aus beispielsweise demselben Material wie der Boden 4 jeweils einen nach oben weisenden ersten Abschnitt 10, an den sich ein nach außen weisender zweiter Abschnitt 12 anschließt. Der erste Abschnitte 10 kann senkrecht oder schräg nach außen verlaufen, der zweite Abschnitt waagerecht oder schräg nach oben oder unten.

An der Unterkante des ersten Abschnittes 10 der Seitenwand 6 setzen Laschen 14 an, die sich zunächst nach unten erstrecken und dann vom Backblech 2 weg nach oben zurückgebogen sind. Diese Laschen 14 der Seitenwand 6 sind in ihren Längen, ihren Dicken und in ihren Abständen zueinander auf die Längen, die Breiten, und die Abstände der Schlitze 8 des Bodens 4 und in ihrer lichten Weite auf die Breite der Stege 16 zwischen den Schlitzen 8 des Bodens 4 und dessen Rand abgestimmt, so dass die Laschen 14 mit den Stegen 16 Scharniere bilden können.

Um die Seitenwände 6 mit dem Boden 4 zu verbinden, wird jede Seitenwand in einem ersten Schritt mit ihren Laschen 14 von oben her in die Schlitze 8 je einer Außenkante des Bodens 4 eingeführt und in einem zweiten Schritt um die als Schwenkachsen wirkenden Stege 16 herum geschwenkt, so dass der beim Einführen der Laschen 14 zunächst nach unten weisende erste Abschnitt 10 der Seitenwand 6 schließlich nach oben weist.
Zur Verbindung der Seitenwände 6 untereinander dienen Verriegelungen 18, die beispielsweise aus einem Schwenkhebel 20 an einer ersten Seitenwand 6 und einer Ausnehmung 22 an einer zweiten Seitenwand 6 bestehen, in die das Ende des Schwenkhebels 20 verriegelnd eingreift. Das Ende des Schwenkhebels 20 kann hierzu als Haken 20' ausgebildet sein, die Ausnehmung 22 als Schlitz. Beide sind insbesondere an den einander berührenden Enden der ersten Abschnitte zweier 6 Seitenwände angeordnet. Das dem Haken 20' gegenüberliegende Ende des Hebels 20 ist vom Backblech weg als Griff 20'' abgekröpft, über dem der nach außen weisende Abschnitt 12 ausgenommen ist.

Die Verbindung zweier benachbarter Seitenwände 6 erfolgt dann in einem ersten Schritt durch Verschwenken dieser Seitenwände 6 um die als horizontale Schwenkachsen wirkenden Stege 16 des Bodens 4 nach oben und in einem zweiten Schritt durch Verschwenken des Hakens 20' des Schwenkhebels 20 µm dessen etwa horizontale Schwenkachse 20''' in den Schlitz 22, so dass das der Haken 20' den ersten Abschnitt 10 der Seitenwand 6 hintergreift. Andere Verriegelungen sind selbstverständlich auch erfasst.

Die Demontage erfolgt in umgekehrter Reihenfolge bis, beispielsweise nach dem Backen, der Kuchen auf dem von den Seitenwänden 6 befreiten Boden 4 verbleibt und so entnommen oder auch serviert werden kann. Die demontierten Einzelteile der Seitenwände und des Bodens lassen sich auch leicht handhaben, ob zur Aufbewahrung oder zur Reinigung von Hand oder im Geschirrspüler.

Das Backblech 24 gemäß der Figuren 5 und 6 weist ein kubisches Backblechteil 26 auf, das baulich und maßlich etwa wie ein herkömmliches Backblech ausgebildet ist, jedoch eine offene Längsseite aufweist, die durch ein separates Backblechteil 28 lösbar verschlossen ist. Beide Backblechteile 26, 28 lassen sich durch Trennen eines herkömmlichen Backbleches herstellen und durch Verriegelungseinrichtungen wie Clipse oder Steck-Klemmsysteme miteinander verriegeln. Vorzugsweise sind jedoch separate Backblechteile 26, 28 vorgesehen, die miteinander einen Überlappungsbereich bilden und auch aus unterschiedlichem Material sein können, das Backblechteil 26 beispielsweise aus emailliertem Blech und das Backblechteil 28 beispielsweise aus temperaturbeständigem Kunststoff. Ebenfalls vorstellbar ist eine Scharnierung.

## Patentansprüche

1. Backblech, das an einer oder mehreren Seiten an, auf oder in Führungen und/oder Einhängeeinrichtungen eines Haushaltsgarofens aufnehmbar ist, wobei wenigstens eine Seitenwand (6, 28) des Backbleches (2) von einem Backgut aufnehmenden Boden (4) abnehmbar oder in eine Lage schwenkbar ist, die einen seitlichen Zugang zum Backgut ermöglicht.

2. Backblech nach Anspruch 1, bei dem wenigstens eine Seitenwand (6, 28) mit dem Boden (4) und/oder wenigstens einer benachbarten Seitenwand (6) lösbar verbunden ist.

3. Backblech nach Anspruch 1 oder 2, bei dem wenigstens eine Seitenwand (6, 28) am Boden (4) angelenkt oder anlenkbar ist und um eine horizontale Schwenkachse in eine mit dem Boden (4) fluchtende Lage oder darüber hinaus schwenkbar ist.

4. Backblech nach einem der Ansprüche 1 bis 3, bei dem wenigstens eine Seitenwand (6) an ihrer Unterkante zurückgewölbte Laschen aufweist, die in randnahe Schlitze des Bodens (4) einführbar und um den Rand (16) herum schwenkbar sind.

5. Backblech nach einem der Ansprüche 1 bis 4, bei dem wenigstens eine Seitenwand an einer benachbarten Seitenwand angelenkt oder anlenkbar ist und um eine vertikale Schwenkachse in eine mit der benachbarten Seitenwand fluchtende Lage oder darüber hinaus schwenkbar ist.

6. Backblech nach einem der Ansprüche 1 bis 5, bei dem wenigstens eine Seitenwand an einem seitlichen Ende zurückgewölbte Laschen aufweist, die in randnahe Schlitze der benachbarten Seitenwand einführbar und um den Rand herum schwenkbar sind.

7. Backblech nach einem der Ansprüche 1 bis 6, bei dem wenigstens eine Seitenwand (6) an wenigstens einem Ende einen Hebel (20) aufweist, der um eine horizontale Achse in eine Ausnehmung (22) einer benachbarten Seitenwand (6) schwenkbar ist, um beide Seitenwände (6) in einer vorzugsweise vertikalen Lage aneinander zu halten.

8. Backblech nach einem der Ansprüche 1 bis 7, bei dem die Seitenwände (6) untereinander und/oder mit dem Boden (4) durch Steck-, Klemm-, Schnapp- und/oder Klipseinrichtungen lösbar verbunden sind.

9. Backblech nach einem der Ansprüche 1 bis 8, bei dem alle Seitenwände (6) untereinander und/oder mit dem Boden (4) lösbar verbunden sind.
